# EUROPEAN PATENT APPLICATION

(11) **EP 1 964 955 A1**
(43) Date of publication of application: **03.09.2008**
(21) Application number: 06834924.0
(22) Date of filing: 19.12.2006
(51) Int. Cl.: D04H 1/42, D04H 1/72, D06M 11/00, D06M 11/38, D06M 13/08, D06M 23/00

(54) **LIGHT-REFLECTING SHEET**

(30) Priority: 22.12.2005 JP 2005369339; 03.02.2006 JP 2006026632
(71) Applicant: TORAY INDUSTRIES, INC., Tokyo 103-8666 (JP)
(72) Inventor: NARUSE, Yoshihiro c/o Shiga Plant, Toray Industries, Inc.,, Shiga 520-8558 (JP); NONAKA, Shuichi c/o Shiga plant, Toray Industries Inc.,, Shiga 520-8558 (JP); OCHI, Takashi c/o Mishima Plant, Toray Industries Inc.,, Shizuoka 411-8652 (JP); SASAMOTO, Tai c/o Mishima Plant, Toray Industries Inc., Shizuoka 411-8652 (JP)
(74) Representative: Webster, Jeremy Mark
(86) International application number: PCT/JP2006/325214
(87) International publication number: WO 2007/072787

(57) **Abstract**

Provided is a recyclable light reflecting sheet which is excellent in light reflection characteristic regardless of being thin type and is contributing to weight reduction of a display. Provided is a light reflecting sheet comprising a sheet containing a single filament with a number mean diameter of 1 to 1000 nm, and having a light reflectance of 95% or more at a wavelength of 560 nm.

## Description

### TECHNICAL FIELD

The present invention relates to a light reflecting sheet containing ultramicrofibers. In particular, the present invention relates to a light reflecting sheet which is excellent in light reflection characteristic regardless of being thin type sheet and preferable as a main constituent member of light reflector substrate for a liquid crystal display.

### BACKGROUND ART

In recent years, as display devices such as personal computers, televisions and cellular phones, displays utilizing liquid crystal have been largely used. Since liquid crystal itself is not a light emitter in these liquid crystal displays, a surface light source called a backlight is placed therein and irradiates light from the back side to enable to display.

In liquid crystal display (LCD), in general, brightness of screen has been improved by placing a light reflector in the backlight and decreasing loss of light as much as possible not to escape light irradiated from a light source to the back surface of screen. As a main constituent member of this light reflector substrate, a white film or the like having micro pores inside a film has been conventionally used (Patent Document 1).

Such white film contains organic particles or inorganic particles with several µm in diameter, and is drawn to cause peeling between the particle and polymer and generate voids, thereby reflecting light at the interface of the polymer and the void (air layer). Therefore, in order to decrease the light transmitting into the back of film as much as possible, it is necessary to increase the number of interfaces to reflect light. Namely, since it is essential to increase the number of voids present in the thickness direction of film, thickness of film must be ensured to some extent, hence there has been a problem that a thin light-reflecting sheet cannot be produced.

Further, although a thin type reflective film where metals such as silver are deposited is known, weight reduction is difficult when incorporating the thin type reflective film in LCD because of the weight increase of sheet due to meal, and since metal and film are mixed, there has been a problem on recycle of the sheet (Patent Document 2). In particular, as for LCD for notebook-size personal computers or cellular phones, increase in weight is fatal, and weight reduction has been strongly demanded.

Hence, as a sheet excellent in weight reduction and easy recyclability, there has been proposed a reflective sheet made of synthetic fiber being more lightweight than metal (Patent Document 3). For this, synthetic polyolefin pulp is subjected to paper making to be into a sheet, which is applied to a reflective sheet. According to Patent Document 3, high reflectance, which is 100% or more at a wavelength of 550 nm, is certainly obtained. However, the reflective sheet described specifically in this document had a thickness as high as 360 µm, and it was difficult to use the sheet even for personal computers, not to speak of cellular phones. It is considered that the technique disclosed in Patent Document 3 has a problem derived from the paper making of synthetic polyolefin pulp. Namely, synthetic polyolefin pulp is obtained by flash spinning, resulting from the process, the mean diameter of fibers is about 2 to 30 µm being still within micron unit, and variation of fiber diameters is also large. Additionally, if this synthetic polyolefin pulp could be subjected to paper making to be into a paper sheet with less thickness, sufficient reflectance would not be obtained because the number of fibers per unit area of paper sheet is small and the number of interfaces for reflecting light is insufficient, and it is considered that as described in Patent Document 3, an increase in the weight per unit area in paper making and an increase in the thickness of sheet are not avoidable in order to enhance reflectance. Therefore, it was difficult for the technique described in Patent Document 3 to be applied to LCD for personal computes and cellular phones requiring a thin light-reflecting sheet.

As described above, there has been demanded a light reflecting sheet which is thin type and excellent in light reflection characteristic as well as lightweight and recyclable easily.

Meanwhile, as for a sheet made of ultramicrofibers, there are known a wet nonwoven by paper making of ultramicrofibers at a nanometer level (Patent Document 4), and a sheet made of ultramicrofibers at a nanometer level by electrospinning (Patent Document 5). These relate to applications to filters or the like utilizing micro pores constituted between ultramicrofibers of a nanometer level, the design and technical idea for these applications are referred to, but, no technical idea for applications to light reflecting sheet utilizing surface reflection of fibers has been indicated at all. Namely, there has been no idea to apply a sheet made of the above-described ultramicrofibers to a light reflecting sheet.
Patent Document 1: Japanese Unexamined Patent Publication No. 2003-160682
Patent Document 2: Japanese Unexamined Patent Publication No. 5-162227 (1993)
Patent Document 3: Japanese Unexamined Patent Publication No. 2005-316149
Patent Document 4: Japanese Unexamined Patent Publication No. 2005-264420
Patent Document 5: Japanese Unexamined Patent Publication No. 2005-218909

### DISCLOSURE OF THE INVENTION

### Problem to be Solved by the Invention

An object of the present invention is to provide a light reflecting sheet which is thin type and excellent in light reflection characteristic as well as lightweight and excellent in easy recycling. Specifically, it aims to provide a light reflecting sheet which is preferable as a light reflector substrate for LCD.

### Means to Solve the Problem

The present invention to solve the above-described problem is mainly constituted by any one of the following.
(1) A light reflecting sheet comprising a sheet containing a fiber with a number mean diameter of 1 to 1000 nm, and having a light reflectance of 95% or more at a wavelength of 560 nm.
(2) A light reflecting sheet comprising a sheet containing a fiber with a number mean diameter of 1 to 500 nm, and having a light reflectance at 560 nm in wavelength of 95% or more.
(3) The light reflecting sheet described in (1) or (2), wherein the mean reflectance at a wavelength region of 380 to 780 nm is 95% or more.
(4) The light reflecting sheet described in any one of (1) to (3), wherein the number average pore diameter in said sheet containing the fiber is 0.001 to 1 µm.
(5) The light reflecting sheet described in any one of (1) to (4), wherein the thickness thereof is 1 to 300 µm.
(6) The light reflecting sheet described in any one of claims (1) to (5), wherein the thermal dimensional change at 90°C is -10 to +10%.
(7) The light reflecting sheet described in any one of (1) to (6), further comprising a support.
(8) The light reflecting sheet described in any one of (1) to (7), wherein color tone b* value of reflection surface of the light reflecting sheet is within a range of -2.0 to +2.0.
(9) A liquid crystal display comprising the light reflecting sheet described in any one of (1) to (8).

### Effect of the Invention

Since a light reflecting sheet according to the present invention has a very small number mean diameter of fibers contained in a sheet as compared with the conventional sheet, it is possible to increase interfaces reflecting light remarkably as compared with the conventional sheet. From this fact, it is possible to obtain a thin type light reflecting sheet having a high reflectance. Further, the light reflecting sheet of the present invention does not need to contain metals, thus it can contributes to weight reduction of LCD and recycling of sheet. Such light reflecting sheet of the present invention is preferable as a main constituent member of light reflector substrate for LCD.

### BEST MODE FOR CARRYING OUT THE INVENTION

Hereinafter, the light reflecting sheet according to the present invention will be described in detail with reference to preferable embodiments.

The light reflecting sheet of the present invention has a sheet containing fibers (hereinafter sometimes referred to as fiber sheet) in a part thereof, and is constituted by a sheet containing fibers alone, or combination of a sheet containing fibers and a member such as other support. Further, the light reflecting sheet of the present invention can reflect light at various wavelengths efficiently, in particular, reflect light at a region of visual light efficiently, and can be preferably used as a main constituent member of light reflector substrate for LCD and the like.

A sheet containing fibers means a planer product containing fibers in at least one part thereof, and a state containing fibers is not particularly limited. In the state where fibers in a sheet are dispersed down to a single filament level, overlap of fibers is minimized and fiber surfaces serving as interface can be effectively used, which is preferable because light can be efficiently reflected. Specifically, it is good to be a state where almost all single filaments are not agglomerated, a state where single filaments are completely randomized, or a state where single filaments are mostly randomized although they are partly agglomerated, but it is more preferable to be a completely random state.
When a state of dispersion is formed, for example, it is preferable to disperse fibers in a two dimension or a three dimension as follows. Namely, to disperse fibers in a two dimension, there are methods that dispersion of fibers is subjected to paper making, dispersion of fiber is dried, and sheeting is conducted directly from spinning such as spunbonding, melt blow, and electrospinning. As an example of method for dispersing fibers in a three dimension, there is a method that dispersion of fibers is dried, preferably freeze dried to mold into a three dimension. Further, it is also preferable that one where fibers are dispersed in a two dimension or a three dimension by the foregoing methods is flattened by pressing to become thin. In particular, one obtained by freeze drying liquid dispersion where fibers are homogeneously dispersed in a liquid and molding fibers in a three dimension is particularly preferable in that a sheet with a higher weight per unit area is easily obtained as compared with the case of paper making or electrospinning and a thin type sheet with a high filling density of fiber can be easily obtained by pressing the sheet with a higher weight per unit area.

The fibers used in the present invention include cellulose produced from wood pulp etc., natural fibers such as hemp, wool and silk, regenerated fibers such as rayon, semisynthetic fibers such as acetate, and synthetic fibers represented by nylon, polyester, acryl, vinylon, polyurethane and the like.
Among them, synthetic fibers are preferable from the viewpoints of easy processing and control of thermal dimensional stability, and synthetic fibers made of thermoplastic polymers are more preferable.

The thermoplastic polymers in the present invention include: (i) polyesters such as polyethylene terephthalate (hereinafter sometimes referred to as PET), polytrimethylene terephthalate (hereinafter sometimes referred to as PTT), polybutylene terephthalate (hereinafter sometimes referred to as PBT) and polylactic acid (hereinafter sometimes referred to as PLA); (ii) polyamides such as nylon 6 (hereinafter sometimes referred to as N6) and nylon 66; (iii) polyolefin such as polystyrene (hereinafter sometimes referred to as PS) and polypropylene (hereinafter sometimes referred to as PP); further (iv) polyphenylene sulfide (hereinafter sometimes referred to as PPS) and the like.

Among them, a fiber made of a crystalline polymer with high melting point and high heat resistance is advantageous in that, when a light reflecting sheet made of the fiber is used as a substrate for light reflector in LCD, dimensional change and deterioration of fiber hardly occur against heat received from a light source. Further, when a fiber is made of a thermoplastic polymer, thermal bonding between fibers is possible in obtaining a thin type reflective sheet by pressing, thereby not only increasing sheet strength but also producing fibers by utilizing a melt spinning method, which can increase the productivity very much. Namely, when a melting point of polymer is 165°C or more, it is preferable that heat resistance of fiber is good. For example, melting points of PLA, PET and N6 are 170°C, 255°C and 220°C, respectively.

Further, a polymer may contain additives such as particles, a flame retardant, antistatic, fluorescent bleach, and UV absorbent. Furthermore, other component may be copolymerized within a range not damaging the object of the present invention. Additionally, in order to enhance reflectance and brightness of a light reflecting sheet more, a fiber is preferably white, and it is beneficial to use a polymer which is hardly colored even if it is exposed to heat, oxygen, or the like, or to contain fluorescent bleach in fiber.

In order to enhance reflection efficiency on the fiber surface, it is preferable to use a polymer with a high refraction index. In general, when a lot of aromatic rings, hetero atoms or heavy atoms are contained in a molecule, a polymer tends to be one with a high refraction index. Example of the polymer with a high refraction index includes PVA (refraction index 1.55), PET (refraction index 1.575), PS (refraction index 1.59), and PPS (refraction index 1.75 to 1.84) . In the present invention, hereinafter, such polymer is sometimes referred to as a high refractive polymer. Further, it is possible to make refraction index high by improving molecular orientation with making polymer being into fiber; for example, for PET, refraction index in a fiber axis direction can be achieved up to 1.7 or more. On the other hand, for a polymer containing no aromatic ring, hetero atom or heavy atom in a molecule, there is a tendency of low refraction index; for example, reflection index is about 1.55 for polyethylene (hereinafter sometimes called PE) or PP.

In the present invention, it is important that fibers constituting a fiber sheet has a number mean diameter of a single filament of 1 to 1000 nm. Since a specific surface area of a single filament is inversely proportional to a single filament diameter, by setting the number mean diameter of a single filament to be within the range, interfaces reflecting light notably increase by several ten to several hundred times in a sheet with the same weight per unit area in comparison with a reflective sheet made of fibers with a number mean diameter of 2 to 30 µm, so that reflection efficiency at a visual light range remarkably increases. Further, fiber itself is markedly soft resulting from that the number mean diameter of a single filament is very small as compared with a conventional sheet. Therefore, even when a sheet containing said fiber is pressed, it is considered that rather than the fiber itself is crushed, the fiber easily bends and moves to be able to efficiently fill gaps of the fiber sheet. As a result, the fiber sheet is made thin easily while the interfaces which is important for reflection of light are fiber hardly crushed. Further, when the fiber sheet in the present invention has the same weight per unit area, the smaller the number mean diameter of a single filament is, the more the number of fibers per unit area, namely the interface reflecting light, increases. As a result, it makes possible even for a thin type fiber sheet to have high reflectance and high brightness. From this viewpoint, a number mean diameter of a single filament is preferably 1 to 500 nm, more preferably 1 to 200 nm, further preferably 1 to 150 nm, and particularly preferably 1 to 100 nm.

In the present invention, a number mean diameter of a single filament can be determined as follows. Namely, the surface of a fiber sheet is observed by a scanning electron microscope (SEM) at a magnitude by which single filaments of at least 150 pieces can be observed in one field of view; in one field of the view of a photograph taken, single filaments of 150 pieces randomly selected are measured for fiber width perpendicular to the fiber longitudinal direction as a diameter of a single filament, and the number average thereof is calculated.

For the light reflecting sheet of the present invention, it is important that a light reflectance at a wavelength of 560 nm is 95% or more. This makes a sheet excellent in masking of light; thus, a sufficient brightness of screen can be obtained when used as a light reflecting sheet in LCD etc., for example. A specific example of light reflectance will be explained in detail in Examples described later, and it can be obtained by measuring reflectance at the wavelength with a commercially available spectrophotometer.

Color at a wavelength of around 560 nm corresponds to from yellow to green. The reason for evaluating reflectance at a wavelength of 560 nm is as follows: brightness is an average values of brightness at each wavelength in a visual light range. Since the value becomes maximum at a wavelength region of around 560 nm, it is easily correlated with brightness when reflectance is evaluated at this wavelength. Further, when fluorescent bleach and like are contained in a light reflecting sheet, there is a case that absorption or emission takes place at a low wavelength region of visual light, by evaluation at the wavelength which does not undergo the influence, it becomes possible to figure out the potential of light reflecting sheet itself.

Herein, light reflectance is improved as the number of interfaces reflecting light in a sheet increases. In the light reflecting sheet of the present invention, almost all interfaces reflecting light are the surfaces of fibers. Therefore, the more the number of fibers per unit area in a light reflecting sheet is, the higher the light reflectance becomes. Hence, when a single filament diameter of the fiber is small and weight per unit area is high, larger reflectance is exhibited due to an increase in the number of fibers in a sheet.
Light reflectance at the wavelength is preferably 98% or more, and more preferably 100% or more. The upper limit of light reflectance is not particularly limited, but is up to 150% according to a current request level. Further, in the light reflecting sheet of the present invention, a mean reflectance at a wavelength region of 380 to 780 nm is preferably 95% or more. When the light reflectance at the above-described wavelength region is lowered, in the case of using the sheet of the present invention for LCD, screen becomes yellowish at a low wavelength region and screen becomes bluish at a high wavelength region. By setting a mean reflectance to be 95% or more, a sufficiently bright screen is obtained with preventing screen from being yellowish or bluish. Although a specific example of the mean reflectance will be explained in detail in Examples described later, it can be obtained by measuring each reflectance at a wavelength of a visual light range, namely at said wavelength region, with a commercially available spectrophotometer, and calculating the average thereof.
In the above-described wavelength region, the mean reflectance is more preferably 98% or more, and further preferably 100% or more. The upper limit of light reflectance is not particularly limited, but is up to 150% according to a current request level.
The light reflecting sheet of the present invention preferably has a brightness of 3500 cd/m². Brightness as used here is brightness as a planar light source, and means brightness when the light reflecting sheet of the present invention is incorporated in a backlight; the higher the value of brightness is, the more the brilliance of display increases, so that a sharp image can be obtained. Although a specific example of the measuring method of brightness will be explained in detail in Examples described later, it can be obtained by measuring brightness when a light reflecting sheet is incorporated in the back side of a backlight used in LCD of a notebook-size personal computer.
Brightness is preferably 3800 cd/m² or more, and further preferably 4200 cd/m² or more. The upper limit of brightness is not particularly limited, but is up to 20000 cd/m² according to a current request level, and a sufficient brightness as the brilliance of screen in a practical use is obtained within about 5000 cd/m².

A fiber sheet constituting the light reflecting sheet of the present invention preferably has a number average pore diameter of 1 µm or less. Since an ultramicrofiber used in the light reflecting sheet of the present invention has very small fiber diameter as compared with an ordinary fiber, the size of micro pore constituted between ultramicrofibers can be made small. Hence, transmitted light passing through a sheet and light leaking laterally from a sheet decrease, as a result, reflectance and brightness can be increased. Although a specific example of measuring a number average pore diameter of micro pores constituted between fibers will be explained in detail in Examples described later, it can be obtained as follows. Namely, a sheet is observed by SEM, in one field of view of the photograph observed, by binarization based on image analysis, the area of a pore surrounded by fibers near the surface in an image is measured, a diameter in terms of circle is obtained from the value and defined as a number average pore diameter.
The number average pore diameter is preferably 0.7 µm or less, and further preferably 0.5 µm or less. The lower limit of number average pore diameter is not particularly limited, but it is about 0.001 µm according to a current request level; since the lower limit in a visual light range is about 380 nm (0.38 µm), the lower limit of number average pore diameter is preferably about 0.1 µm in order to decrease transmitted light passing through a sheet and light leaking laterally from a sheet in a practical use,.

If the light reflecting sheet of the present invention is used as a light reflector substrate for LCD, it may be demanded that thickness is thinner depending on the kind of display. For example, in LCD for TV, there is no problem particularly as far as thickness of a light reflector used for this is 1 mm or less. However, when used in LCD for a personal computer or cellular phone, a light reflector substrate and light reflecting sheet constituting it are demanded to be thin because the display itself is thinner and compact. For example, they are demanded to have a thickness of 300 µm or less when used for a personal computer and a thickness of 100 µm or less when used for a cellular phone. In the light reflecting sheet of the present invention, it becomes possible to easily design a light reflecting sheet thin enough to satisfy the foregoing demands since a number mean diameter of a single filament is very small as compared with a conventional one. From the above viewpoints, the thickness of the light reflecting sheet in the present invention is preferably 300 µm or less, more preferably 100 µm or less, and further preferably 60 µm or less. The lower limit of thickness is not particularly limited, but 1 µm or more is enough according to a current request level.

In the present invention, weight per unit area of a fiber sheet is preferably 50 to 600 g/m². The more the number of fibers per unit area is, namely, the higher the weight per unit area is, the more the interface reflecting light increases, so that reflectance tends to become high, and it is possible to suppress the total thickness of a light reflecting sheet by setting a weight per unit area to 600 g/m² or less. Further, by setting a weight per unit area to be 50 g/m² or more, it is possible to suppress transmitted light passing through a sheet and light leaking laterally from a sheet, and enhance reflectance and brightness. The weight per unit area is preferably 50 to 200 g/m², and further preferably 50 to 120 g/m².

In the present invention, the apparent density of a fiber sheet is preferably 0.01 g/cm³ or more. The apparent density of a fiber sheet does not give a great influence on light reflectance. However, for example, for a sheet with the same weight per unit area, the higher the apparent density is, the smaller the thickness of a fiber sheet can be made. In addition thereto, since mechanical strength of a fiber sheet can be improved, a light reflecting sheet hardly breaks when it is incorporated in LCD; as a result, workability can be improved. The apparent density is preferably 0.1 g/cm³ or more, and further preferably 0.5 g/cm³ or more. The upper limit of apparent density is not particularly limited, but it is preferably 1.5 g/cm³ or less from the viewpoint of weight reduction.

If the light reflecting sheet of the present invention is used as a light reflector substrate for LCD, because it is exposed to heat from a light source over a long time, there is a possibility that wrinkles generates in the light reflecting sheet to deteriorate reflection characteristics or the sheet is peeled from a substrate when the light reflecting sheet itself has a large thermal shrinkage or thermal extension. From this viewpoint, it is preferable that the light reflecting sheet of the present invention has a thermal dimensional change at 90°C is -10 to +10%. Although the measuring method of thermal dimensional change will be explained in detail in Examples described below, it can be obtained by measuring dimensional changes before and after heat treatment when the sheet of the present invention is left still at a predetermined temperature for a predetermined hour in a constant-temperature oven, a hot-air dryer or the like. From consideration of a practical use when the light reflecting sheet of the present invention is incorporated in a backlight, it is enough to evaluate the dimensional change upon keeping it at 90°C for 30 minutes; at said temperature, the dimensional change is more preferably -5 to +5% and further preferably -1 to +1%. Further, a small dimensional change at higher temperatures is demanded depending on applications, thus the thermal dimensional change at 150°C is preferably -5 to +5% and the thermal dimensional change at 190°C is preferably -5 to +5%.

The light reflecting sheet of the present invention may be a sheet alone containing fibers as described above, but it is preferably constituted by a sheet containing fibers and a support. By integrating a sheet containing fibers and a support, it is possible to improve strength as a light reflecting sheet and improve handling in assembling a light reflector substrate. From this viewpoint, it is preferable that tensile strength (breaking strength) of a support is 50 MPa or more, and tensile modulus (Young modulus) is 1 GPa or more. Additionally, as for measurements of tensile strength and tensile modulus, they can be measured by a constant-speed tensile tester commercially available, for example, when a support is film, they can be measured by using a sample of 10 mm in width and 50 mm in length with a clamp gap of 50 mm at a tensile speed of 200 mm/min in accordance with JIS K7161 (1994).

Further, in the case of providing a support, even if a fiber sheet itself is insufficient in thermal dimensional stability, it is possible to ensure a sufficient thermal dimensional stability as a light reflecting sheet by integrating the sheet with a support having good thermal dimensional stability. From this viewpoint, it is preferable to provide a support whose thermal dimensional change at 90°C is -1 to +1%.

The form of a support may be suitably chosen from nonwoven fabric, film, and the like depending on its purposes. From consideration of bonding by hot press, it is preferable that a support is also made of a thermoplastic polymer; from consideration of smoothness of sheet, film is preferable as a support. As the film used as a support, there may be no problem as long as the film is excellent in thermal dimensional stability, and from the viewpoint of improvement of reflectance, the film may be a white film, metal-deposited film, or the like excellent in reflection characteristic.

Further, base materials constituting a fiber sheet and a support used in the present invention may be same or different, but may be preferably same from consideration of recycling. Specifically, in the case where a sheet made of fiber is constituted by nylon, a support is also constituted by nylon type, and in the case where the sheet is constituted by polyester, a support is also constituted by polyester type. In the case where the base materials are same, chemical affinity to chemicals and the like is the same. Hence, for example, chemicals can be more uniformly attached when the light reflecting sheet of the present invention is functionally processed with fluorescent bleach and UV absorbent. Further, in the case where the base materials are the same, bonding properties between the fiber sheet and support are enhanced by a intermolecular force, and not only strength of sheet is improved, but also peeling of fiber from sheet can be prevented.

For the light reflecting sheet of the present invention, reflection surface preferably has higher whiteness to minimize internal absorption of light. In particular, since bluish tone is more preferable than yellowish one, the reflection surface of the light reflecting sheet of the present invention has b* value of +2.0 or less. On the other hand, too much bluish one is not preferable, so that b* value is preferably -2.0 or more. Namely, b* value is preferably within a range of -2.0 to +2.0. The b* value is more preferable -1.5 to +1. 5, and further preferably -1.0 to +1.0.

Further, from the viewpoints that internal absorption of light is suppressed and reflectance as well as brightness is improved, L* value of reflection surface is preferably 80 to 100, more preferably 90 to 100, and further preferably 95 to 100. Further, from the same reason, a* value of reflection surface is preferably -2.0 to +1.5, more preferably -1.0 to +1.0, and further preferably -0.5 to +0.5. Although a specific example of the measuring method of the above-described L*, a* and b* will be explained in detail in Examples described below, they can be obtained by measuring color tones of sheet with a commercially available spectrophotometer.

In the present invention, a sheet containing fibers is to be a reflection surface, thus whitening a fiber itself or making it finer is preferable. In order to whiten a fiber, it is preferable to make a polymer hardly colored with heat, oxygen, acid, alkali, or the like being into fiber. From this viewpoint, polyester type or polypropylene with high chemical resistance is preferable rather than nylon type having an amine in its terminal. Further, in order to suppress coloring by heat in spinning process etc., a radical scavenger, a catalyst-deactivating agent or the like is preferably added in a polymer constituting a fiber. Above all, a catalyst-deactivating agent having coordinative ability with a metal ion is effective; in particular, one having a phosphorous atom in its molecular structure is preferable. Further, it is also preferable to add fluorescent bleach for improving whiteness. The fluorescent bleach may be added to any part in a sheet; for example, it may be added inside a fiber, or may be present only in the surface layer of a light reflecting sheet. As the kind of fluorescent bleach, a commercially available one is suitably chosen; for example, there can be used "Yubitex" (registered trademark) (manufactured by Ciba-Geigy Corporation), OB-1 (manufactured by Eastman Corporation), TBO (manufactured by Sumitomo Seika Co., Ltd.), "Keikol" (registered trademark) (manufactured by Nippon Soda Co., Ltd.), "Kayalight" (registered trademark) (manufactured by Nippon Kayaku Co., Ltd.), and "Leukopur EGM" (registered trademark) (manufactured by Clariant (Japan) K.K.). The additive amount of fluorescent bleach in a fiber is preferably 0.005 to 1% by weight, more preferably 0.007 to 0.7% by weight, and further preferably 0.01 to 0.5% by weight.

Further, in order to prevent deterioration of a light reflecting sheet by ultraviolet ray, it is also preferable to add ultraviolet absorbent together with fluorescent bleach. In regard to this matter, it may be added to any part in a sheet in the same manner as the case of the fluorescent bleach.

Next, a production method of a light reflecting sheet is explained.

First, a fiber to be used in the present invention is prepared, and a production method of the fiber is not particularly limited. As an example of the production method of nanometer-level ultramicrofiber by melt spinning, for example, a known method described in Japanese Unexamined Patent Publication No. 2004-162244 can be adopted. Further, as described in Japanese Unexamined Patent Publication No. 2005-273067, a fiber can be obtained by electrospinning.

Subsequently, in order to obtain a fiber sheet containing the fiber obtained by the above-described method, one that fibers are two-dimensionally dispersed by paper making, by drying dispersion of fibers or by electrospinning; or sponge-like one that fibers are three-dimensionally dispersed by drying dispersion of fibers or preferably by freeze drying is produced. Herein, dispersion of fibers means a state that single filaments are dispersed in disperse medium; next, a preparation method of dispersion of ultramicrofiber is explained.

The ultramicrofiber obtained as described above is cut into a desired fiber length with a guillotine cutter or a slice machine. In order to improve dispersibility of fiber in a dispersion, fiber is preferably cut to a suitable length. Namely, dispersibility is deteriorated when a fiber length is too long, whereas degree of entanglement of fibers in a sheet becomes small when a fiber length is too short; as a result, strength of the sheet obtained becomes small. Therefore, the fiber length is preferably cut to 0.2 to 30 mm. The fiber length is more preferably 0.5 to 10 mm, and further preferably 0.8 to 5 mm.

Next, the cut fiber obtained is dispersed in a disperse medium. As the disperse media, in addition to water, from consideration of compatibility with fiber, common organic solvents can be preferably used as follows: (i) hydrocarbon type solvent such as hexane and toluene; (ii) halogenated hydrocarbon type solvent such as chloroform and trichloroethylene; (iii) alcohol type solvent such as ethanol and isopropanol; (iv) ether type solvent such as ethyl ether and tetrahydrofuran; (v) ketone type solvent such as acetone and methyl ethyl ketone; (vi) ester type solvent such as methyl acetate ad ethyl acetate; (vii) polyalcohol type solvent such as ethylene glycol and propylene glycol; and (viii) amine and amide solvents such as triethylamine and N,N-dimethylformamide; from consideration of safety, environment and the like, water is preferably used.

As for a method for dispersing cut fibers in a disperse medium, a stirring machine such as mixer and homogenizer may be used. In the case of a state that single filaments like nanofibers are strongly agglomerated each other in cut fibers, beating in a disperse medium is preferable as a pretreatment process for dispersion by stirring. It is preferable that shear force is given by a Niagara beater, refiner, cutter, laboratory scale grinding machine, biomixer, household mixer, roll mill, mortar, PFI mill or the like to disperse fibers one piece by one piece and introduce them into a dispersion medium.

Further, in order to give a uniform dispersibility of fiber in a dispersion of fibers or to improve mechanical strength in sheet to be formed, the fiber concentration in dispersions is preferably 0.0001 to 10% by weight relative to the total weight of the dispersions. In particular, mechanical strength of sheet depends on presence condition of fiber in dispersions, namely, largely depends on distance between fibers, thus, it is preferable that the fiber concentration in dispersions is controlled within the above-described range. The fiber concentration in dispersions is more preferably 0.001 to 5% by weight, and further preferably 0.01 to 3% by weight.

Further, in order to suppress re-agglomeration of fiber, a dispersing agent may be used if necessary. As the kind of dispersing agent, for example, when the dispersing agent is used in water system, it is preferably selected from: (i) anionic type such as polycarboxylate; (ii) cationic type such as quarternary ammonium salt; and (iii) nonionic type such as polyoxyethylene ether and polyoxyethylene ester. The molecular weight of dispersing agent is preferably 1000 to 50000, and more preferably 5000 to 15000. The concentration of dispersing agent is preferably 0.00001 to 20% by weight relative to the total of dispersions, more preferably 0.0001 to 5% by weight, and further preferably 0.01 to 1% by weight, and a sufficient dispersion effect can be thus obtained.

Subsequently, the dispersion of fibers obtained as described above is subjected to paper making to give a fiber sheet. Specifically, for example, a method described in Japanese Unexamined Patent Publication No. 2005-264420 can be adopted. Here, since fiber used in the present invention is a nanometer level ultramicrofiber whose fiber diameter is very small, draining properties in paper making are bad and it may be difficult to increase the weight per unit area simply only by paper making. On the other hand, in order to enhance light reflectance and brightness, an increase in interface reflecting light is essential; in order to achieve this, some level of weight per unit area is necessary. Therefore, it is preferable that the dispersing element of fibers is further laminated on a sheet once obtained by paper making to get higher weight per unit area. As the laminating method, for example, it is preferable to adopt a method that sheets obtained by paper making in other line are further transferred on a sheet once obtained by paper making one after another. Herein, in order to improve draining properties in fiber making and achieve a high weight per unit area, it is possible to conduct a mixed paper making of ultramicrofiber with other fiber exceeding 1 µm of fiber diameter.

Further, as described in Japanese Unexamined Patent Publication No. 2005-218909, it is possible to obtain a fiber sheet composed of ultramicrofiber of a nanometer level by electospinning. Here, a general merit of electrospinning is to produce a sheet with thin and uniform thickness in one process. For example, in air filter applications, a sheet of 1 g/m² or less in weight per unit area is ordinarily made. Apparently, when the line speed of a collecting device of electrospun fibers is slowed down, it is not principally impossible to obtain a sheet of high weight per unit area in one step, but it is unfavorable method for producing a sheet of high weight per unit area required in the present invention because discharge rate per unit time is extremely small and productivity is extremely low, and as the fiber sheet collected becomes thicker, spinning line is disturbed due to the change of electric field characteristic, and it is difficult to obtain a uniform sheet. As described above, electrospinning has been studied variously so far with a technical idea completely opposite to the technical idea for producing a fiber sheet used in the present invention. Namely, in an electrospinning method, a sheet of high weight per unit area to achieve the object of the present invention has been outside the object, and has not been thus studied. Hence, in the case where electrospinning is used for producing the light reflecting sheet of the present invention, it is preferable that one or more sheets obtained by elecrospinning are superimposed and laminated to get a high weight per unit area. However, since each sheet is peeled by merely piling them up, it is preferable to conduct integral molding by superimposing and pressing a plurality of the sheets obtained by elecrospinning. Further, as described above, since the sheet obtained by elecrospinning may be inferior in thermal dimensional stability, it is preferable to integrate the sheet with a support by laminating and bonding.

Further, it is possible to obtain a fiber sheet having fine micro pores or voids by drying the foregoing dispersion of fibers for fibers to be dispersed in a two-dimension or three-dimension. In this case, the following method can be adopted.

For immobilizing fibers in the dispersion of fibers obtained as described above in the dispersion state to produce a fiber sheet, the dispersion of fibers is put in a suitable container or molding form. It can be molded in a desired shape by arbitrarily changing the shape of the container or molding form. Thereafter, dispersion media are dried and removed from the dispersion of fibers put in the container or molding form. Example of merit of drying and removing dispersion media includes the following. In a method to obtain a fiber sheet by a process of filtering the dispersion of fiber like paper making for example, it is generally difficult to obtain a fiber sheet having high weight per unit area since freeness of ultramicrofiber is bad. However, in a method of removing solvents by drying, it is possible to easily obtain a fiber sheet having high weight per unit area by controlling the amount of dispersion of fibers to be put in a molding form and fiber concentration in the dispersion of fibers.

The drying method includes drying with ambient air, drying with hot air, vacuum drying, freeze drying and the like. In order to disperse fibers in a two-dimension or a three-dimension, a drying method may be suitably chosen. On the other hand, in order to obtain a fiber sheet that fibers are dispersed three-dimensionally in a good condition and immobilized, freeze drying is preferable. In the process of freeze drying, first, dispersions are frozen in no time by liquid nitrogen or an ultra-low temperature freezer. A state that the dispersions are frozen can be thereby produced, namely, it is possible to immobilize the dispersion state of fibers in a three-dimension. Thereafter, dispersion media are sublimated under vacuum. By such method, only dispersion media are removed while the dispersion condition of fibers is kept immobilized and it is possible to obtain a fiber sheet that fibers are immobilized in a state dispersed three-dimensionally. The fiber sheet thus obtained has a lot of fine micro pores and voids, and so the density thereof is small. However, the fiber sheet itself is easily compressed by pressing, and the density thereof is easily enhanced because ultramicrofibers fill the voids. When the weight per unit area of a fiber sheet before pressing is designed large, there is a merit that it is easy to obtain a fiber sheet of high weight per unit area and thin type.

As described above, a fiber sheet used in the present invention can be obtained by fiber making, electrospinning, drying or freeze drying; in particular, when a fiber sheet is formed by an electrospinning method, fiber becomes amorphous or crystallinity of fiber becomes very low since the fibers are formed while evaporating the solvent rapidly, and so unfavorable properties may be exhibited such that strength of a fiber sheet is insufficient or thermal dimensional change of a fiber sheet excessively becomes large. Then, it is also preferable to solve the problem of a fiber sheet by electrospinning by means of integration via laminating or bonding a fiber sheet on a support. The method of laminating or bonding a fiber sheet by electrospinning on a support is not particularly limited. In the case of laminating, it is possible to produce a sheet by electrospinning directly onto a support. In the case of bonding, it is possible to bond a sheet previously obtained by electrospinning and a support with an adhesive in a separate process. However, a simple laminating may cause peeling easily, and in bonding, an adhesive may evaporate by the heat of a light source depending on the kind of adhesive to contaminate the inside of LCD panel. Therefore, in order to integrate a fiber sheet and a support, it is preferable to apply thermal bonding by hot press or the like. In this case, a thermal adhesive fiber or particle other than the foregoing ultramicrofiber may be mixed in a fiber sheet. Additionally, being not limited to a fiber sheet by electrospinning, the above-described integration method may be obviously adopted for a fiber sheet obtained by fiber making or drying dispersion of fibers.
Further, in order to make a fiber sheet thin, the obtained fiber sheet can be further pressed to give a thinner fiber sheet. The press machine is not particularly limited. For a fiber sheet being uniformly flattened in a surface direction or a thick direction, it is preferable to use various press machines including flat press such as iron type and hydraulic press as well as roller type such as calender and emboss.

The temperature in pressing can be suitably chosen, and pressing at room temperature is also possible. However, in order to obtain a sheet which is thin and excellent in strength, it is preferable to press within a temperature range from [glass transition point (Tg) of polymer + 50]°C or more, to [decomposition temperature of polymer - 20]°C or less although it depends on the kind of polymer forming a fiber.

The pressure in pressing may also be suitably adjusted depending on the weight per unit area, thickness and density of a target sheet. For example, in the case of roller type press machines such as calender and emboss, linear pressure is preferably 200 Kgf/cm (19.6 N/cm) or less, more preferably 100 Kgf/cm (9.81 N/cm) or less, and further preferably 60 Kgf/cm (5.89N/cm) or less. On the other hand, although the lower limit is not particularly limited, it is preferably 0.1 Kgf/cm (9.81×10⁻³ N/cm) or more. Further, in the case of flat press such as iron type and hydraulic press, surface pressure is preferably 400 Kgf/cm² (39.2 MPa) or less, more preferably 200 Kgf/cm² (19.6 MPa) or less, and further preferably 100 Kgf/cm² (9.81 MPa) or less. On the other hand, the lower limit is not particularly limited, but it is preferably 1 Kgf/cm² (9.81×10⁻² MPa) or more. From this, a thin type sheet can be easily obtained.

The thus obtained light reflecting sheet of the present invention is excellent in reflection characteristic even it is a thin type sheet as compared with the conventional white film or a reflective sheet of ordinary fiber. Further, since it is composed mainly of ultramicrofiber, it is excellent in bending recovery and has a high workability for incorporating it into a display as compared with films. Therefore, it is suitable for a light reflector used in LCD and the like. For example, the light reflecting sheet of the present invention is incorporated in a backlight of a surface light source as a light reflector and combined with a light guide plate, various films such as diffusing film and light-collecting film, and color film, thereby to give LCD being a display device for a personal computer, television, cellular phone, car navigation, and the like.

Further, since the light reflecting sheet of the present invention is excellent in a light reflectance in a visual light range, it can exhibit excellent characteristic not only as a substrate for light reflector in LCD, but also as a light reflector for, for example, illumination, copier, projection system display, facsimile machine, electronic blackboard, white color standard of diffusion light, photographic paper, receiver paper, photographic bulb, light-emitting diode (LED) and back sheet of solar battery.

### EXAMPLES

Hereinafter, the present invention will be described in detail with reference to Examples. Here, the following methods are used for the measurements in Production examples and Examples.

### (1) Surface observation of light reflecting sheet by SEM

Platinum was deposited on a sample, which was observed by an ultrahigh-resolution field emission scanning electron microscope.
SEM apparatus: UHR-FE-SEM manufactured by Hitachi Corporation

### (2) Number mean diameter of fiber

It was observed by a magnitude that at least 150 pieces of single filaments was able to be observed in one field of view by the above-described SEM, and, from the observation image, fiber width perpendicular to the longitudinal direction of the fiber was determined as a diameter of fiber with an image processing soft (WINROOF) manufactured by Mitani Corporation. At this time, 150 pieces of fibers were randomly selected in the same field of view and these diameters were analyzed to obtain a simple average. When a number mean diameter of single filament is obtained from a fiber bundle before forming a fiber sheet, a transmission electron microscope (TEM) may be used.

### (3) Weight per unit area

Weight per unit area was measured in accordance with a method of JIS L 10968.4.2 (1999). Namely, 3 pieces of test specimen of 20 cmx20 cm were sampled from a light reflecting sheet, absolute dry mass of those specimens was measured and converted into mass per 1 m², and a simple average was obtained.

### (4) Thickness

Three pieces of test specimen were sampled from a light reflecting sheet, thickness was measured at 5 points per one piece with a micrometer (manufactured by Mitutoyo Co., Ltd., product name Digimatic micrometer), which was conducted for three pieces of test specimen, and a simple average was obtained.

### (5) Apparent density

Apparent density was obtained by calculation using the weight per unit area in item (3) and the thickness in item (4).

### (6) Light reflectance at a wavelength of 560 nm and mean light reflectance at a wavelength region of 380 to 780 nm

A sample of 5 cm square was prepared and measured for reflectance at 380 to 780 nm under a condition that an integrating sphere 130-063 of φ 60 (manufactured by Hitachi Corporation) and an angled spacer of 10° were equipped in a spectrophotometer U-3410 (manufactured by Hitachi Corporation). This measurement was conducted for 3 samples, and the values at 560 nm were simply averaged to obtain a mean reflectance. Further, the measurements at the above-described wavelength region by each 10 nm were summed, which were divided by the number of data to obtain a mean reflectance. Herein, as a standard white board, one provided in the apparatus (manufactured by Hitachi Corporation) was used.

### (7) Brightness

A light reflecting sheet was incorporated in a backlight for measurement. Specifically, the used backlight was a straight pipe one light edge type backlight (14.1 inches) used in a notebook-size personal computer prepared for evaluation, and a light reflecting sheet to be measured was incorporated in place of a light reflecting sheet originally incorporated. The backlight surface was divided into 4 partitions of 2x2, and the front brightness was measured after 1 hour following lightning to obtain the data. As the measuring apparatus of brightness, BM-7 manufactured by Topcon Co., Ltd. was used, the measurement was conducted under a measuring angle of 1° and a distance between the brightness tester and backlight of 80 cm. A simple average of brightness at 4 points in a backlight surface was obtained.

### (8) Number average pore diameter

Number average pore diameter of micro pores constituted between fibers of a light reflecting sheet was obtained as follows. First, on a SEM picture photographed in the item (1), a frame of square of 50 mm on a side was drawn in an arbitrary place. Further, the fiber image in the frame was scanned into an image processing soft (WINROOF) manufactured by Mitani Corporation, 8 or more lines for measuring a brightness distribution (10 lines in the present Example) were mounted at equal intervals on the image scanned in order to binarize the image, and the brightness distribution of each fiber thereon was measured. Ten fibers were chosen from order of the highest surface brightness and the brightnesses thereof were averaged to obtain a mean high brightness Lh. Brightness of 50% of the mean high brightness Lh was defined as a threshold value Lu, the fibers with brightness Lu or less were eliminated by image processing (Threshold function) (pores near surface part were selected by this processing). The area Ai (nm²) surrounded by the selected fibers were totally measured with image processing (either manual procedure or computer automatic method is possible). Ai was divided by n (the number of pores), and a diameter of a circle having equivalent area to the value obtained was calculated as a number average pore diameter.

### (9) Thermal dimensional change

Two pieces of test specimen of 10 cm in length and 10 cm in width were sampled from a light reflecting sheet. A constant temperature and constant humidity dryer, a Natural-oven NDO-600SD (manufactured by Tokyo Rika Kikai Co. , Ltd.) was set at 90°C, and these test specimens ware left still in the dryer for 30 minutes. Shrinkage ratios in a surface direction were measured from the areas before and after being left still, and a simple average was obtained, which was defined as a thermal dimensional change.

### (10) Color tone (L*, a*, b*)

Two pieces of test specimen of 5 cm in length and 5 cm in width were sampled from a light reflecting sheet. These test specimens were set in a spectrophotometric colorimeter CM-3700d (manufactured by Konica Minolta Holdings, Inc.), these were measured by a tester LAV (φ 25.4 mm) and SCI method (including regular reflection light), and a simple average was obtained.

### [Production example 1 of dispersion]

Using a double-screw extruder, 20% by weight of N6 having melting point of 220°C and molten viscosity of 57 Pa·s (240°C, shear velocity 2432 sec⁻¹), and 80% by weight of poly (L-lactic acid) having melting point of 170°C (optical purity of 99.5% or more), weight average molecular weight of 120000 and molten viscosity of 30 Pa·s (240°C, shear velocity 2432 sec⁻¹) were melt-kneaded at 220°C to give a polymer alloy chip. In this case, one that amine ends of N6 were blocked with acetic acid was used. Further, in order to suppress yellowing in kneading of polymer and spinning process, as a catalyst deactivating agent, "Adekastab" (registered trademark) AX-71 manufactured by Asahi Denka Kogyo Co., Ltd. was added by 500 ppm relative to the whole polymer, and kneaded.

This polymer alloy chip was melt-spun at a spinning temperature of 230°C and a spinneret surface temperature of 215°C. Thread discharged was, after cooling, oil fed with a oil feeding guide, drawn at a spinning speed of 3000 m/min and wound up. Then, it was subjected to drawing and heat treatment at a first hot roller temperature of 90°C and a second hot roller temperature of 130°C. In this case, draw ratio between the hot rollers was set to 1.5 times, and a polymer alloy fiber of 62 dtex and 36 filaments was obtained.

The obtained polymer alloy fiber was immersed in 1% aqueous sodium hydroxide solution at 98°C for 1 hour to hydrolyze and eliminate a poly (L-lactic acid) component in the polymer alloy fiber by 99% or more; after neutralization with acetic acid, it was washed with water and dried, thereby to obtain a fiber bundle of N6 nanofibers. This fiber bundle was analyzed from its SEM photograph. As a result, the number mean diameter of N6 nanofibers was as unconventionally fine as 60 nm, and the fiber constitution ratio of a single filament of more than 100 nm in diameter was 0% by weight.

The obtained fiber bundle of N6 nanofibers was cut to 2 mm in length to give a cut fiber of N6 nanofibers. Into Tappi standard Niagara testing beater (manufacture by Kumagai Riki Kogyo Co., Ltd.), 23 L of water and 30 g of the previously obtained cut fiber were loaded and pre-beaten for 5 minutes, thereafter excess water was removed to collect the fiber. The mass of this fiber was 250 g, and the water content was 88% by weight. The fiber of 250 g in a moisture state was loaded as it was in an automatic PFI mill (manufacture by Kumagai Riki Kogyo Co., Ltd.), and it was beaten for 6 minutes at a rotation number of 1500 rpm and a clearance of 0.2 mm. Into an Oster blender (manufacture by Oster Corporation), loaded were 42 g of the beaten fiber, 0.5 g of an anionic dispersing agent, "Sharol" (registered trademark) AN-103P as a dispersing agent (manufactured by Dai-ichi Kogyo Seiyaku Co., Ltd.: molecular weight 10000) and 500 g of water, then stirred for 30 minutes at a rotation number of 13900 rpm to obtain N6 nanofiber dispersion 1 of 1.0% by weight in the content of N6 nanofiber.

### [Production example 2 of dispersion]

A polymer alloy fiber was obtained in the same manner as in Production example 1 of dispersion except that N6 was 45% by weight and has melting point of 220°C and molten viscosity of 212 Pa·s (262°C, shear velocity 121.6 sec⁻¹).

The obtained polymer alloy fiber was treated in the same manner as in Production example 1 of dispersion to hydrolyze and eliminate a poly (L-lactic acid) component in the polymer alloy fiber by 99% or more; after neutralization with acetic acid, it was washed with water and dried, thereby to obtain a fiber bundle of N6 nanofibers. This fiber bundle was analyzed from its SEM photograph. As a result, the number mean diameter of N6 nanofibers was as unconventionally fine as 120 nm, and the fiber constitution ratio of a single filament of more than 500 nm in diameter was 0% by weight, and the fiber constitution ratio of a single filament of more than 200 nm in diameter was 1% by weight.

The obtained fiber bundle of N6 nanofibers was cut to 2 mm in length to give a cut fiber of N6 nanofibers. This was pre-beaten in the same manner as in Production example 1 of dispersion to obtain N6 nanofiber with the water content of 88% by weight. Then further, it was beaten in the same manner as in Production example 1 of dispersion, using an anionic dispersing agent, "Sharol" (registered trademark) AN-103P as a dispersing agent (manufactured by Dai-ichi Kogyo Seiyaku Co. , Ltd.: molecular weight 10000), and stirred in the same manner as in Production example 1 of dispersion to obtain N6 nanofiber dispersion 2 of 0.5% by weight in the content of N6 nanofiber.

### [Production example 3 of dispersion]

N6 nanofiber dispersion 3 was obtained in the same manner as in Production example 1 of dispersion except that the content of N6 nanofiber was set to 0.1% by weight

### [Production example 4 of dispersion]

N6 nanofiber dispersion 4 of 1.0% by weight in the content of N6 nanofiber was obtained in the same manner as in Production example 1 of dispersion except that the cut length of N6 nanofiber was set to 5 mm.

### [Production example 5 of dispersion]

Using PBT (polybutylene terephthalate) having melting point of 225°C and molten viscosity of 120 Pa·s (262°C, 121.6 sec⁻¹), and polystyrene (PS) copolymerized with 22% of 2-ethylhexyl acrylate, the content of PBT was set to 20% by weight, and they were melt-kneaded by a double-screw extruder at a kneading temperature of 240°C to obtain a polymer alloy chip. This was melt-spun in the same manner as in Production example 1 of dispersion at a spinning temperature of 260°C, a spinneret surface temperature of 245°C and a spinning speed of 1200 m/min. In this case, the discharge rate per a single hole was set to 1.0 g/min. The obtained undrawn fiber was subjected to drawing and heat treatment in the same manner as in Production example 1 of dispersion at a drawing temperature of 100°C, draw ratio of 2.49 times, and a heat set temperature of 115°C. The obtained drawn fiber had 161 dtex and 36 filaments.

The obtained polymer alloy fiber was immersed in trichlene to elute copolymerized PS as a sea component by 99% or more, and it was dried thereby to obtain a fiber bundle of PBT nanofibers. This fiber bundle was analyzed from its SEM photograph; as a result, the number mean diameter of PBT nanofibers was as unconventionally fine as 85 nm, the fiber constitution ratio of a single filament of more than 200 nm in diameter was 0% by weight, and the fiber ratio of a single filament of more than 100 nm in diameter was 1% by weight.

The fiber bundle of PBT nanofibers obtained was cut to 2 mm in length to give a cut fiber of PBT nanofibers. This was pre-beaten in the same manner as in Production example 1 of dispersion to obtain PBT nanofiber with the water content of 80% by weight. Then further, it was beaten in the same manner as in Production example 1 of dispersion. Into an Oster blender (manufacture by Oster Corporation), loaded were 25 g of the beaten fiber, 0.5 g of a nonionic dispersing agent, "Neugen" (registered trademark) EA-87 as a dispersing agent (manufactured by Dai-ichi Kogyo Seiyaku Co., Ltd.: molecular weight 10000) and 500 g of water, then stirred for 30 minutes at a rotation number of 13900 rpm to obtain PBT nanofiber dispersion 5 of 1.0% by weight in the content of PBT nanofiber.

### [Production example 6 of dispersion]

A polymer alloy chip was obtained by melt-kneading in the same manner as in Production example 1 of dispersion except that N6 was replaced with 23% by weight of PP (polypropylene) having melting point of 162°C and molten viscosity of 350 Pa·s (220°C, 121. 6 sec⁻¹). Using this polymer alloy chip, it was melt-spun in the same manner as in Production example 1 of dispersion at a spinning temperature of 230°C, a spinneret surface temperature of 215°C, discharge rate per a single hole of 1.5 g/min and a spinning speed of 900 m/min. The obtained undrawn fiber was subjected to drawing and heat treatment in the same manner as in Production example 1 of dispersion at a drawing temperature of 90°C, draw ratio of 2.7 times, and a heat set temperature of 130°C to obtain a polymer alloy fiber.

The obtained polymer alloy fiber was immersed in 1% aqueous sodium hydroxide solution at 98°C to hydrolyze and eliminate poly (L-lactic acid) component in the polymer alloy fiber by 99% or more; after neutralization with acetic acid, it was washed with water and dried thereby to obtain a fiber bundle of PP nanofibers. This fiber bundle was analyzed from its SEM photograph. As a result, the number mean diameter of N6 nanofibers was 240 nm, and fiber ratio of a single filament of more than 500 nm in diameter was 0% by weight.

The fiber bundle of PP nanofibers obtained was cut to 2 mm in length to give a cut fiber of PP nanofibers. This was pre-beaten in the same manner as in Production example 1 of dispersion to obtain PP nanofiber with the water content of 75% by weight, and then it was beaten in the same manner as in Production example 1 of dispersion. Into an Oster blender (manufacture by Oster Corporation), loaded were 20 g of the beaten fiber, 0.5 g of a nonionic dispersing agent, "Neugen" (registered trademark) EA-87 as a dispersing agent (manufactured by Dai-ichi Kogyo Seiyaku Co., Ltd.: molecular weight 10000) and 500 g of water, then stirred for 30 minutes at a rotation number of 13900 rpm to obtain PP nanofiber dispersion 6 of 1.0% by weight in the content of PP nanofiber.

### [Production example 7 of dispersion]

Using a double-screw extruder, 20% by weight of N6 having melting point of 220°C and molten viscosity of 57 Pa·s (240°C, shear velocity 2432 sec⁻¹), and 80% by weight of poly (L-lactic acid) having melting point of 170°C (optical purity 99.5% or more), weight average molecular weight of 120000 and molten viscosity of 30 Pa·s (240°C, shear velocity 2432 sec⁻¹) were melt-kneaded at 220°C to give a polymer alloy chip.

This polymer alloy chip was melt-spun at a spinning temperature of 230°C and a spinneret surface temperature of 215°C. In this case, the discharge rate per a single hole was set to 0.94 g/min. Thread discharged was, after cooling, oil fed with a oil feeding guide, and wound up. Then, it was subjected to drawing and heat treatment at a first hot roller temperature of 90°C and a second hot roller temperature of 130°C. In this case, draw ratio between the hot rollers was set to 1.5 times, and a polymer alloy fiber of 62 dtex and 36 filaments was obtained. The obtained polymer alloy fiber was immersed in 1% aqueous sodium hydroxide solution at 98°C for 1hour to hydrolyze and eliminate a poly (L-lactic acid) component in the polymer alloy fiber by 99% or more; after neutralization with acetic acid, it was washed with water and dried thereby to obtain a fiber bundle of N6 nanofibers. This fiber bundle was analyzed from its SEM photograph. As a result, the number mean diameter of N6 nanofibers was as unconventionally fine as 60 nm, and the fiber constitution ratio of a single filament of more than 100 nm in diameter was 0% by weight.

The fiber bundle of N6 nanofibers obtained was cut to 2 mm in length to give a cut fiber of N6 nanofibers. Into Tappi standard Niagara testing beater (manufacture by Kumagai Riki Kogyo Co., Ltd.), 23 L of water and 30 g of the previously obtained cut fiber were loaded and pre-beaten for 5 minutes, thereafter excess water was removed to collect the fiber. The weight of this fiber was 250 g, and the water content was 88% by weight. The fiber of 250 g in a moisture state was loaded as it is in an automatic PFI mill (manufacture by Kumagai Riki Kogyo Co., Ltd.), and it was beaten for 6 minutes at a rotation number of 1500 rpm and a clearance of 0.2 mm. Into an Oster blender (manufacture by Oster Corporation), loaded were 42 g of the beaten fiber, 0.5 g of an anionic dispersing agent, "Sharol" (registered trademark) AN-103P as a dispersing agent (manufactured by Dai-ichi Kogyo Seiyaku Co., Ltd.: molecular weight 10000) and 500 g of water, then stirred for 30 minutes at a rotation number of 13900 rpm to obtain N6 nanofiber dispersion 1 of 1.0% by weight in the content of N6 nanofiber.

### [Production example 8 of dispersion]

N6 nanofiber dispersion 8 of 1.0% by weight in the content of N6 nanofiber was obtained in the same manner as in Production example 5 of dispersion except that the cut length of N6 nanofiber was set to 5 mm.

### <Example 1>

Using the nanofiber dispersion 1 obtained in Production example 1 of dispersion, 250 g of this dispersion was put in a stainless steel vat of about 25 cm in length × 19 cm in width × 5 in depth; further, the dispersion was frozen with liquid nitrogen, then left still in an ultracold freezer at -80°C for 30 minutes. Thereafter, the frozen sample was freeze-dried in vacuum of 10 Pa or less by a vacuum freeze dryer TF10-85ATNNN (manufactured by Takara Corporation) to obtain a light reflecting sheet.

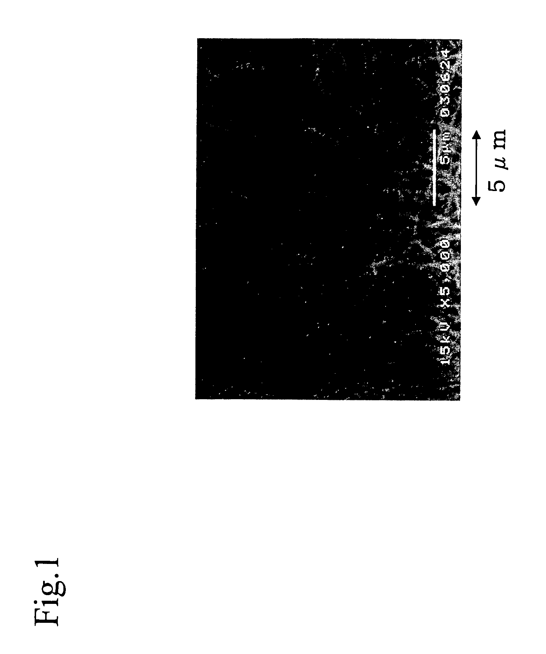

A single fiber in the sheet was observed by SEM to find the number mean diameter of 60 nm. Additionally, a SEM photograph of the obtained light reflecting sheet is shown in Fig. 1.

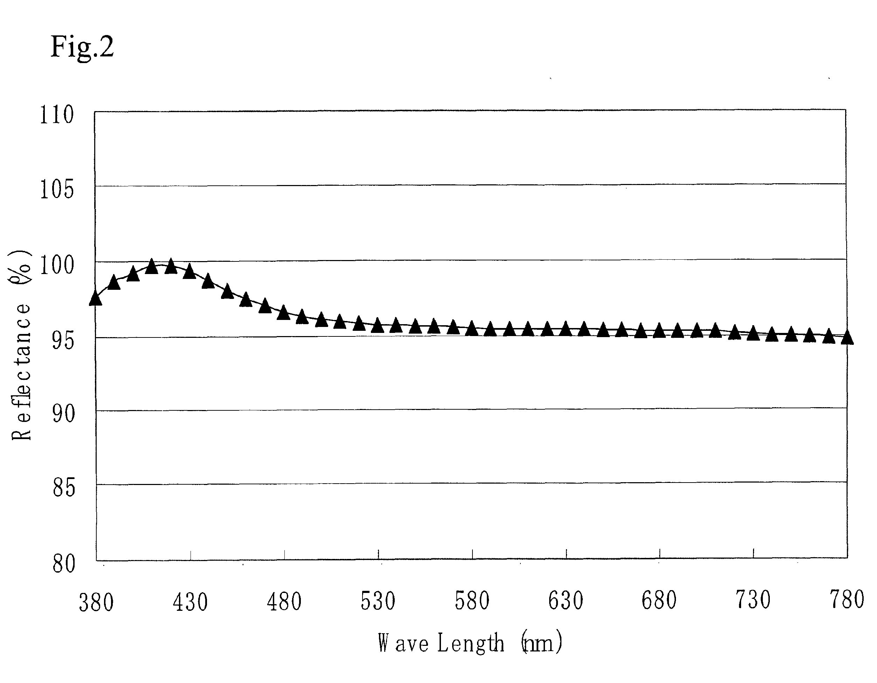

The reflectance of the obtained light reflecting sheet was measured and the result as shown in Fig. 2 was obtained. The light reflectance at a wavelength of 560 nm was 96% and the mean reflectance at 380 to 780 nm was 96%, showing an excellent reflection characteristic.

Further, the number average pore diameter of sheet was 0.32 µm, thickness was 5.2 mm, weight per unit area was 101 g/m², apparent density was 0.019 g/cm³ and thermal dimensional change at 90°C was 9.8%.

Further, color tone of sheet was measured. The sheet was excellent in whiteness having L* value of 97, a* value of -0.2 and b* value of 1.7.

Further, the above-described sheet was not able to be measured for brightness because it was too thick, thus, the obtained sheet was pressed, using a flat press 37 t press (manufactured by Gonno Hydraulic Manufacturing Co., Ltd.), under a pressure of 10 Kgf/cm² (0.981 MPa) at room temperature for 1 minute to give a sheet of 1 mm in thickness, whose brightness was evaluated. As a result, brightness was 4332 cd/m², giving a sufficient characteristic.

### <Example 2>

A molding (before pressing) obtained in Example 1 was pressed, using a flat press 37 t press (manufactured by Gonno Hydraulic Manufacturing Co., Ltd.), under a pressure of 100 Kgf/cm² (9.81 MPa) at room temperature for 1 minute to give a sheet.

The physical properties of the obtained sheet such as number mean diameter of single fiber and reflectance were shown in Table 2, and a thin type light reflecting sheet excellent in reflection characteristic was obtained.

### <Example 3>

A sheet was obtained in the same manner as in Example 2 except that the pressure in Example 2 was set to 150 Kgf/cm² (14.7 MPa).

The physical properties of the obtained sheet such as number mean diameter of single fiber and reflectance were shown in Table 2, and a thin type light reflecting sheet excellent in reflection characteristic was obtained.

### <Example 4>

A sheet was obtained in the same manner as in Example 2 except that the press temperature in Example 2 was set to 170°C. The physical properties of the obtained sheet such as number mean diameter of single fiber and reflectance were shown in Table 2, and a thin type light reflecting sheet excellent in reflection characteristic was obtained.

### <Example 5>

Using the nanofiber dispersion 2 obtained in Production example 2 of dispersion, 750 g of this dispersion was put in a stainless steel vat of about 25 cm in length × 19 cm in width × 5 in depth; further, the dispersion was frozen with liquid nitrogen, then left still in an ultracold freezer at -80°C for 30 minutes. Thereafter, the frozen sample was freeze-dried in vacuum of 10 Pa or less by a vacuum freeze dryer TF10-85ATNNN (manufactured by Takara Corporation) to obtain a molding. Subsequently, the obtained molding was pressed, using a flat press 37 t press (manufactured by Gonno Hydraulic Manufacturing Co., Ltd.), under a pressure of 150 Kg/cm² (14.7 MPa) at 120°C for 1 minute to obtain a light reflecting sheet.

The physical properties of the obtained sheet such as number mean diameter of single fiber and reflectance were shown in Table 2, and a thin type light reflecting sheet excellent in reflection characteristic was obtained. Here, in the present Example, the reason that reflectance became somewhat high in spite of larger fiber diameter than that of Examples 1 to 4 is considered to be such that weight per unit area of fiber sheet becomes high and light reflecting interface increases.

### <Example 6>

Using the nanofiber dispersion 5 obtained in Production example 5 of dispersion, 500 g of this dispersion was put in a stainless steel vat of about 25 cm in length × 19 cm in width × 5 in depth; further, the dispersion was frozen with liquid nitrogen, then left still in an ultracold freezer at -80°C for 30 minutes. Thereafter, the frozen sample was freeze-dried in vacuum of 10 Pa or less by a vacuum freeze dryer TF10-85ATNNN (manufactured by Takara Corporation) to obtain a molding. Subsequently, the obtained molding was pressed, using a flat press 37 t press (manufactured by Gonno Hydraulic Manufacturing Co., Ltd.), under a pressure of 150 Kg/cm² (14.7 MPa) at 180°C for 1 minute to obtain a light reflecting sheet.

The physical properties of the obtained sheet such as number mean diameter of single fiber and reflectance were shown in Table 2, and a thin type light reflecting sheet excellent in reflection characteristic was obtained. Here, in the present Example, the reason that reflectance is higher than that of Example 5 is considered to be such that fiber diameter is small and weight per unit area of fiber sheet is high, thus light reflecting interface increases.

### <Example 7>

Using the nanofiber dispersion 6 obtained in Production example 6 of dispersion, 625 g of this dispersion was put in a stainless steel vat of about 25 cm in length × 19 cm in width × 5 in depth; further, the dispersion was frozen with liquid nitrogen, then left still in an ultracold freezer at -80°C for 30 minutes. Thereafter, the frozen sample was freeze-dried in vacuum of 10 Pa or less by a vacuum freeze dryer TF10-85ATNNN (manufactured by Takara Corporation) to obtain a molding. Subsequently, the obtained molding was pressed, using a flat press 37 t press (manufactured by Gonno Hydraulic Manufacturing Co., Ltd.), under a pressure of 150 Kg/cm² (14.7 MPa) at 130°C for 1 minute to obtain a light reflecting sheet.

The physical properties of the obtained sheet such as number mean diameter of single fiber and reflectance were shown in Table 2, and a thin type light reflecting sheet excellent in reflection characteristic was obtained.

### <Example 8>

Using the nanofiber dispersion 3 obtained in Production example 3 of dispersion, 500 g of this dispersion was put in a stainless steel vat of about 25 cm in length × 19 cm in width × 5 in depth; this was evaporated to dryness in a hot air dryer at 80°C to obtain a molding. Subsequently, the obtained molding was pressed, using a flat press 37 t press (manufactured by Gonno Hydraulic Manufacturing Co., Ltd.), under a pressure of 150 Kg/cm² (14.7 MPa) at 170°C for 1 minute to obtain a light reflecting sheet.

The physical properties of the obtained sheet such as number mean diameter of single fiber and reflectance were shown in Table 2, and a thin type light reflecting sheet excellent in reflection characteristic was obtained.

### <Example 9>

Using 50 g of the dispersion 4 obtained in Production example 4 of dispersion, after water was added thereto to be 20 liters, this was put in a disintegrator and dispersed for 5 minutes. The dispersion in the disintegrator was put in a container of a square type sheet machine (manufactured by Kumagai Riki Kogyo Co., Ltd.) which is a testing paper-making machine, and this adjusted mixture was subjected to fiber making onto a screen gauze of 25 cm square (made of PET, fiber diameter of 70 µm, pore diameter of 80 µm) previously placed on a woven metal wire (200 mesh) for fiber making, drained by rollers and dried by a drum type dryer, thereby to obtain a sheet with the screen gauze as a support.

Separately, in the same manner as the described above, using 50 g of the dispersion, after water was added thereto to be 20 liters, this was put in a disintegrator and dispersed for 5 minutes, then subjected to paper making by being fed directly onto a woven metal wire for paper making. The nanofiber layer formed on the woven metal wire was transferred on the previously obtained sheet; this transfer operation was repeated for 5 times to increase weight per unit area thereby to obtain a sheet.

A single fiber in the sheet was observed by SEM to find the number mean diameter of 60 nm.

The physical properties of the obtained sheet such as number mean diameter of single fiber and reflectance were shown in Table 2, and a thin type light reflecting sheet excellent in reflection characteristic was obtained.

### <Example 10>

The sheet obtained in Example 9 was pressed, using a flat press 37 t press (manufactured by Gonno Hydraulic Manufacturing Co., Ltd.), under a pressure of 150 Kg/cm² (14.7 MPa) at 170°C for 1 minute to obtain a sheet.

The physical properties of the obtained sheet (after pressing) such as number mean diameter of single fiber and reflectance were shown in Table 2, and a thin type light reflecting sheet excellent in reflection characteristic was obtained.

### <Example 11>

Using 1.25 g of N6 ultramicrofiber of a single fiber number mean diameter of 2 µm being cut to 2 mm and 1250 g of the dispersion obtained in Production example 1 of dispersion, after water was further added thereto to be 20 liters, this was put in a disintegrator and dispersed for 5 minutes. The dispersion in the disintegrator was put in a container of a square type sheet machine (manufactured by Kumagai Riki Kogyo Co., Ltd.) which is a testing paper-making machine, and it was subjected to paper making by being fed directly onto a woven metal wire for paper making, was transferred on a filter paper, and was drained by rollers and dried by a drum type dryer; Then the sheet was peeled from the filter paper, thereby to obtain a mixed paper. The obtained mixed paper was pressed in the same manner as in Example 10 to obtain a light reflecting sheet.

The physical properties of the obtained sheet such as number mean diameter of single fiber and reflectance were shown in Table 2, and a thin type light reflecting sheet excellent in reflection characteristic was obtained.

### <Example 12>

On the light reflecting sheet obtained in Example 2, a transparent PET film of 100 µm in thickness (manufactured by Toray Industries, Inc., "Lumilar" (registered trademark) #100QT10) was laid, and pressed, using a flat press 37 t press (manufactured by Gonno Hydraulic Manufacturing Co., Ltd.), under a pressure of 150 Kg/cm² (14.7 MPa) at 170°C for 3 minutes to integrate a fiber sheet with a transparent film by hot press without using an adhesive, binder fiber or the like, thereby to obtain a light reflecting sheet. Herein, the tensile strength (breaking strength) of the transparent film was 210 MPa, tensile modulus (Young modulus) was 4 GPa and thermal dimensional change at 90°C was 0.1%.

The physical properties of the obtained sheet such as number mean diameter of single fiber and reflectance were shown in Table 2, and a thin type light reflecting sheet excellent in reflection characteristic, further excellent in thermal dimensional stability due to having a transparent film as a support was obtained.

### <Example 13>

A molding (before pressing) obtained in Example 1 was pressed, using a flat press 37 t press (manufactured by Gonno Hydraulic Manufacturing Co., Ltd.), under a pressure of 200 Kg/cm² (19.6 MPa) at 170°C for 1 minute to obtain a sheet.

The physical properties of the obtained sheet such as number mean diameter of single fiber and reflectance were shown in Table 2, and a thin type light reflecting sheet excellent in reflection characteristic was obtained.

### <Comparative Examples 1, 2>

Using the nanofiber dispersion 1 obtained in Production example 1 of dispersion, fiber-making was conducted in the same manner as a method of example 1 in Japanese Unexamined Patent Publication No. 2005-264420, thereby to obtain sheets having weight per unit area of 13 g/m² (Comparative Example 1) and 22 g/m² (Comparative Example 2). Each sheet obtained was measured for reflectance and brightness, as shown in Table 2. The light reflectance at a wavelength of 560 nm was 80% for Comparative Example 1 and 87% for Comparative Example 2, and the brightness was 2880 cd/m² for Comparative Example 1 and 3100 cd/m² for Comparative Example 2, which were inferior in light reflection characteristic.

### <Comparative Example 3>

Using 17.5 g of a polyolefin synthetic pulp SWP (product number: E620) manufactured by Mitsui Chemicals, Inc., after a nonionic dispersing agent, or Neugen EA-87 manufactured by Dai-ichi Kogyo Seiyaku Co., Ltd. and water were further added thereto to be 20 liters, this was put in a disintegrator and dispersed for 5 minutes. The dispersion in the disintegrator was put in a container of a square type sheet machine (manufactured by Kumagai Riki Kogyo Co., Ltd.) which is a testing paper-making machine; this adjusted mixture was subjected to paper making by being fed onto a woven metal wire for paper making, was drained by rollers and dried by a drum type dryer, thereby to obtain a light reflecting sheet by paper making of polyolefin synthetic pulp.

A single fiber in the sheet was observed by SEM to find the one with large variation of fiber diameter being mixed of about 2 µm at the thinnest and about 30 µm at the thickest.

The physical properties of the obtained sheet were shown in Table 2. The reflectance at a wavelength of 560 nm was 97%, which means the sheet was excellent in reflection characteristic; however, the weight per unit area was 104 g/m² and the thickness was as large as 400 µm, so that the sheet was not suitable for applications requiring a thin type light reflecting sheet.

### <Comparative Examples 4, 5>

Light reflecting sheets by paper making of polyolefin synthetic pulp were obtained in the same manner as in Comparative Example 3 except that weight per unit area was set to 53 g/m² in Comparative Example 4 and 162 g/m² in Comparative Example 5. The physical properties were shown in Table 2. The sheet of Comparative Example 4 had a thickness of 250 µm; however, its reflectance at a wavelength of 560 nm was 93%, which means the sheet was inferior in reflection characteristic. Further, the sheet of Comparative Example 5 had the reflectance of 98 % at a wavelength of 560 nm, which means the sheet was excellent in reflection characteristic; however, the weight per unit area was 162 g/m² and the thickness was as large as 550 µm, so that the sheet was not suitable for applications requiring a thin type light reflecting sheet.

### <Comparative Example 6>

In Comparative Example 5, the paper sheet was further pressed, using a flat press 37 t press (manufactured by Gonno Hydraulic Manufacturing Co., Ltd.), under a pressure of 100 Kg/cm² (9.81 MPa) at room temperature for 20 seconds to obtain a light reflecting sheet.

The physical properties were shown in Table 2. Thickness of sheet was able to be thinned by pressing into 250 µm, but from the evaluation of reflectance, the reflectance at a wavelength of 560 nmwas 94%, which means the sheet was inferior in reflection characteristic.

### <Example 14>

In Example 14, using the nanofiber dispersion 8 obtained in Production example 8 of dispersion, after a molding was obtained by freeze drying in the same manner as in Example 2, it was pressed at room temperature to obtain a sheet.

The weight per unit area, thickness, density and reflectance of the obtained sheet were shown in Table 3.

### <Examples 15, 16>

Using the nanofiber dispersion 7 obtained in Production example 7 of dispersion, 250 g of this dispersion was put in a stainless steel vat of about 25 cm in length × 19 cm in width × 5 in depth; further, the dispersion was frozen with liquid nitrogen, then left still in an ultracold freezer at -80°C for 30 minutes. Thereafter, the frozen sample was freeze-dried in vacuum of 10 Pa or less by a vacuum freeze dryer TF10-85ATNNN (manufactured by Takara Corporation) to obtain a molding that fibers were dispersed three-dimensionally to have fine micro pores and voids.

Subsequently, one that 3 pieces of the obtained molding were laid over (Example 15) and one that 5 pieces thereof were laid over (Example 16) were prepared, and each was pressed, using a flat press 37 t press (manufactured by Gonno Hydraulic Manufacturing Co., Ltd.), under a pressure of 100 Kg/cm² (9.81 MPa) at room temperature for 1 minute to obtain a sheet.

The weight per unit area, thickness, density and reflectance of the resulting sheet were each shown in Table 3.

### <Example 17>

Using the nanofiber dispersion 7 obtained in Production example 7 of dispersion, 250 g of this dispersion was put in a stainless steel vat of about 25 cm in length × 19 cm in width × 5 in depth; further, the dispersion was frozen with liquid nitrogen, then left still in an ultracold freezer at -80°C for 30 minutes. Thereafter, the frozen sample was freeze-dried in vacuum of 10 Pa or less by a vacuum freeze dryer TF10-85ATNNN (manufactured by Takara Corporation) to obtain a molding that fibers were dispersed three-dimensionally to have fine micro pores and voids.

The obtained molding was pressed, using a flat press 37 t press (manufactured by Gonno Hydraulic Manufacturing Co. , Ltd.), under a pressure of 100 Kg/cm² (9.81 MPa) at 170°C for 1 minute to obtain a sheet.

The weight per unit area, thickness, density and reflectance of the obtained sheet were shown in Table 3.

### <Example 18>

N6 pellet of sulfuric acid relative viscosity of 2.8 was dissolved in formic acid to prepare a spinning stock solution of 15 wt% concentration.

Further, the following spinning apparatus was used. Namely, an injector made of plastic was equipped with an injection needle, Terumo Non-Bevel needle 21G (manufactured by Terumo Corporation) to be a syringe. The above-described injection needle was connected to a high-voltage power source; further, a metal roller of 10 cmφ in diameter and 15 mm in width (collection part earthed) was disposed at a place 10 cm apart and facing the above-described syringe.

Next, the above-described spinning stock solution was put in the syringe; while traversing the syringe (cycle: 7 minutes and 12 seconds), the spinning stock solution was extruded perpendicular to the direction of gravity action with a feeder (extruded rate: 18.6 µl/min), At the same time, a voltage of +20 kV was applied to a nozzle from the high-voltage power source while rotating the above-described roller at a constant speed (surface speed: 21 m/min), and so electric field was acted to the extruded spinning stock solution to produce an ultramicrofiber and the continuous ultramicrofiber was piled up on the above-described roller to obtain a sheet. Herein, the atmosphere temperature was 20°C, and relative humidity was 50%.

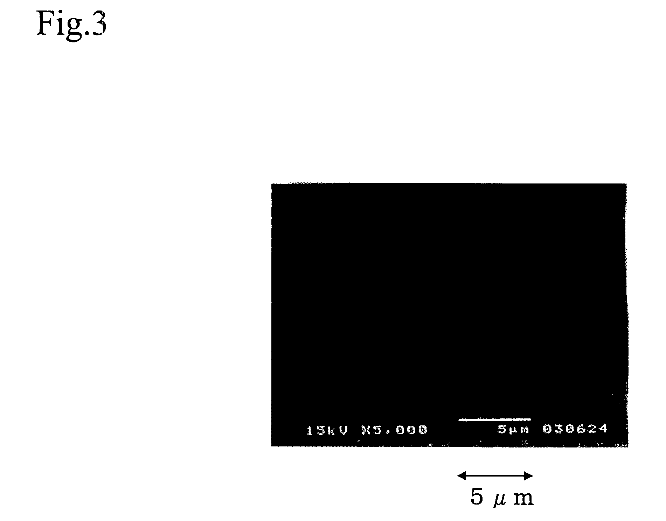

The physical properties of the resulting sheet such as number mean diameter of single fiber and reflectance were shown in Table 3, and a thin type light reflecting sheet excellent in reflection characteristic was obtained. Here, a SEM observation image of the resulting sheet was shown in Fig. 3.

### <Example 19>

A sheet was obtained in the same manner as in Example 18 except that the amount of ultramicrofiber to be piled up on the roller was increased so that the weight per unit area of the sheet in Example 18 was set to 140 g/m².

The physical properties of the obtained sheet such as number mean diameter of single fiber and reflectance were shown in Table 2, and a thin type light reflecting sheet excellent in reflection characteristic was obtained.

### <Examples 20, 21>

The sheet obtained in Example 18 for Example 20 and the sheet obtained in Example 19 for Example 21 were each pressed, using a flat press 37 t press (manufactured by Gonno Hydraulic Manufacturing Co., Ltd.), under a pressure of 100 Kg/cm² (9.81 MPa) at room temperature for 1 minute to obtain a sheet.

The physical properties of the obtained sheet such as number mean diameter of single fiber and reflectance were shown in Table 3, and a thin type light reflecting sheet excellent in reflection characteristic was obtained.

### <Example 22>

On the light reflecting sheet obtained in Example 20, a transparent PET film of 4.5 µm in thickness (manufactured by Toray Industries, Inc., "Lumilar" (registered trademark) type F57) was laid, and pressed, using a flat press 37 t press (manufactured by Gonno Hydraulic Manufacturing Co., Ltd.), under a pressure of 150 Kg/cm² (14.7 MPa) at 100°C for 3 minutes to obtain a light reflecting sheet that a fiber sheet was integrated with a transparent film. Herein, the thermal dimensional change of the transparent film at 90°C was 0.1%.

The physical properties of the obtained sheet such as number mean diameter of single fiber and reflectance were shown in Table 3, and a thin type light reflecting sheet excellent in reflection characteristic, further excellent in workability due to having a transparent film as a support was obtained.

### <Example 23>

A PVA powder of complete saponification type (manufactured by Kuraray Co., Ltd., Kuraray Poval 117) was dissolved in water to prepare a spinning stock solution of 8 wt% concentration.

A sheet was obtained by piling up continuous ultramicrofiber on the metal roller in the same manner as in Example 18 except that applied voltage to the nozzle was set to 12 kV and clearance between the syringe and metal roller was set to 5 cm.

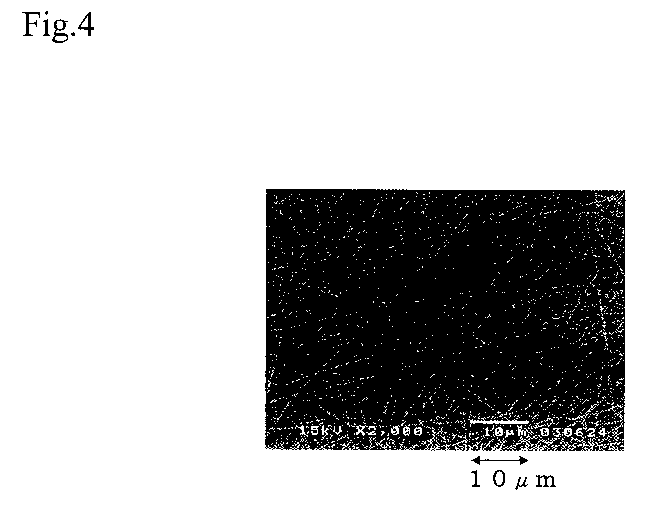

The physical properties of the obtained sheet such as number mean diameter of single fiber and reflectance were shown in Table 3, and a thin type light reflecting sheet excellent in reflection characteristic was obtained. Herein, a SEM observation image of the resulting sheet was shown in Fig. 4.

### <Examples 24, 25>

A sheet was obtained in the same manner as in Example 18 except that in Example 23, the amount of ultramicrofiber to be piled up on the roller was reduced into 17 g/m² in weight per unit area of sheet for Example 24, and 13 g/m² for Example 25.

The physical properties of the obtained sheet such as number mean diameter of single fiber and reflectance were shown in Table 3, and a thin type light reflecting sheet excellent in reflection characteristic was obtained.

### <Examples 26, 27>

The sheet obtained in Example 23 for Example 26 and the sheet obtained in Example 24 for Example 27 were each pressed, using a flat press 37 t press (manufactured by Gonno Hydraulic Manufacturing Co., Ltd.), under a pressure of 10 Kg/cm² (0.981 MPa) at room temperature for 20 seconds to obtain a sheet. The physical properties of the obtained sheet such as number mean diameter of single fiber and reflectance were shown in Table 3, and a thin type light reflecting sheet excellent in reflection characteristic was obtained.

### <Example 28>

On the light reflecting sheet obtained in Example 27, a transparent PET film was laid in the same manner as in Example 22, and was pressed, using a flat press 37 t press (manufactured by Gonno Hydraulic Manufacturing Co., Ltd.), under a pressure of 10 Kg/cm² (0.981 MPa) at room temperature for 20 seconds to obtain a sheet that a fiber sheet was integrated with a transparent film.

The physical properties of the obtained sheet such as number mean diameter of single fiber and reflectance were shown in Table 3, and a thin type light reflecting sheet excellent in reflection characteristic, further excellent in workability due to having a transparent film as a support was obtained.

### <Example 29>

A sheet was obtained in the same manner as in Example 23 except that the concentration of spinning stock solution was set to 20 wt%.

The physical properties of the obtained sheet such as number mean diameter of single fiber and reflectance were shown in Table 3, and a thin type light reflecting sheet excellent in reflection characteristic was obtained.

### <Example 30>

Polyether type polyurethane with a number average molecular weight of 200000 was dissolved in DMF to prepare a spinning stock solution of 20 wt% concentration.

A sheet was obtained by piling up continuous ultramicrofiber on the metal roller in the same manner as in Example 18 except that applied voltage to the nozzle was set to 10 kV.

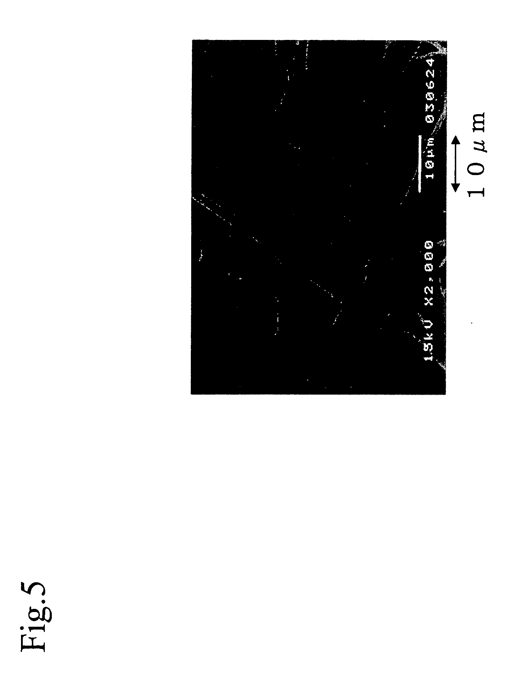

The physical properties of the obtained sheet such as number mean diameter of single fiber and reflectance were shown in Table 3, and a thin type light reflecting sheet excellent in reflection characteristic was obtained. Herein, a SEM observation image of the obtained sheet was shown in Fig. 5.

Production examples of dispersions described above were summarized in Table 1, and each Example and Comparative Example were summarized in Table 2 and Table 3.

**[Table 1]**

| | Dispersing agent | Fiber dispersing element | | | |
|---|---|---|---|---|---|
| | Kind | Polymer | Number mean diameter | Fiber ratio of coarse single filament | Fiber concentration in dispersions (wt%) |
| Dispersion example 1 | Sharol AN-103P | N6 | 60 nm | Fiber more than 100 nm in diameter: 0% | 1.0 |
| Dispersion example 2 | Sharol AN-103P | N6 | 120 nm | Fiber more than 500 nm in diameter: 0% Fiber more than 200 nm in diameter: | 0.5 |
| Dispersion example 3 | Sharol AN-103P | N6 | 60 nm | Fiber more than 100 nm in diameter: 0% | 0.1 |
| Dispersion example 4 | Sharol AN-103P | N6 | 60 nm | Fiber more than 100 nm in diameter: 0% | 1.0 |
| Dispersion example 5 | Neugen EA-87 | P B T | 85 nm | Fiber more than 200 nm in diameter: 0% Fiber more than 100 nm in diameter: | 1.0 |
| Dispersion example 6 | Neugen EA-87 | P P | 240 nm | iber more than 500 nm in diameter: C | 1.0 |
| Production example 7 | Sharol AN-103P | N6 | 60 nm | Fiber more than 100 nm in diameter: 0% | 1.0 |
| Production example 8 | Sharol AN-103P | N6 | 60 nm | Fiber more than 100 nm in diameter: 0% | 1.0 |

**[Table 2]**

| | Used dispersions | Sheet | | | | | | | | | | | |
|---|---|---|---|---|---|---|---|---|---|---|---|---|---|
| | | Number mean diameter | Reflectance at 560 nm(%) | Mean reflectance at 380 to 780 nm(%) | Brightness (cd/m²) | Number average of pore diameter | Thickness (µm) | Weight per unit area (g/m²) | Apparent density (g/cm³) | 90°C Thermal dimensional change(%) | L* | a* | b* |
| Example 1 | Dispersion 1 | 60n m | 96 | 96 | 4332 | 0.32 | 5200 | 101 | 0.019 | 9.8 | 97 | -0.2 | 1.7 |
| Example 2 | Dispersion 1 | 60n m | 95 | 95 | 4312 | 0.31 | 130 | 101 | 0.78 | 1.3 | 96 | -0.2 | 1.7 |
| Example 3 | Dispersion 1 | 60n m | 95 | 95 | 4287 | 0.3 | 125 | 101 | 0.81 | 0.8 | 96 | -0.2 | 1.7 |
| Example 4 | Dispersion 1 | 60n m | 95 | 96 | 4312 | 0.29 | 117 | 100 | 0.85 | 0.8 | 95 | -0.2 | 1.8 |
| Example 5 | Dispersion 2 | 120n m | 97 | 96 | 4377 | 0.46 | 200 | 152 | 0.76 | 0.9 | 98 | -0.1 | 1.5 |
| Example 6 | Dispersion 5 | 85n m | 98 | 97 | 4200 | 0.35 | 260 | 204 | 0.78 | 0.7 | 97 | -0.1 | 1 |
| Example 7 | Dispersion 6 | 240 n m | 95 | 95 | 3850 | 0.54 | 300 | 252 | 0.84 | 0.9 | 95 | -0.5 | -0.5 |
| Example 8 | Dispersion 3 | 60n m | 95 | 94 | 4250 | 0.32 | 120 | 100 | 0.83 | 0.8 | 96 | -0.3 | 1.9 |
| Example 9 | Dispersion 4 | 60n m | 95 | 95 | 4260 | 0.31 | 250 | 100 | 0.36 | 0.8 | 95 | -0.2 | 1.6 |
| Example 10 | Dispersion 4 | 60n m | 96 | 95 | 4310 | 0.29 | 180 | 100 | 0.56 | 0.3 | 96 | -0.3 | 1.8 |
| Example 11 | Dispersion 1 | 70n m | 96 | 95 | 3780 | 0.41 | 180 | 150 | 0.83 | 0.2 | 95 | -0.1 | 1.4 |
| Example 12 | Dispersion 1 | 60n m | 95 | 95 | 4287 | 0.31 | 230 | 210 | 0.91 | 0.1 | 96 | -0.2 | 1.7 |
| Example 13 | Dispersion 1 | 60n m | 96 | 95 | 4330 | 0.26 | 99 | 101 | 1.02 | 0.5 | 96 | -0.2 | 1.8 |
| Comparative Example1 | Dispersion 1 | 60 n m | 80 | 79 | 2880 | 0.3 | 30 | 13 | 0.43 | 0.9 | 76 | -1.3 | -4 |
| Comparative Example2 | Dispersion 1 | 60n m | 87 | 86 | 3100 | 0.31 | 50 | 22 | 0.44 | 0.8 | 79 | -1.1 | -5 |
| Comparative Example3 | None (SWP) | 6µm | 97 | 97 | 3200 | - | 400 | 104 | 0.26 | - | - | - | - |
| Comparative Example4 | None (SWP) | 6µm | 93 | 92 | 2930 | - | 250 | 53 | 0.22 | - | - | - | - |
| Comparative Example5 | None (SWP) | 6µm | 98 | 97 | 3150 | - | 550 | 162 | 0.29 | - | - | - | - |
| Comparative Example6 | None (SWP) | 6µm | 94 | 93 | 3360 | - | 250 | 162 | 0.65 | - | - | - | - |

**[Table 3]**

| | Used dispersions | Sheet | | | | | | | | | | | |
|---|---|---|---|---|---|---|---|---|---|---|---|---|---|
| | | Number mean diameter | Reflectance at 560 nm(%) | Mean reflectance at 380 to 780 nm(%) | Brightnes s (cd/m²) | Number average of pore diameter (µm) | Thickness (µm) | Weight per unit area (g/m²) | apparent density (g/cm²) | 90°C Thermal dimensional change(%) | L* | a* | b* |
| Example 14 | Dispersion 8 | 60 nm | 95 | 95 | 4275 | 0.32 | 128 | 102 | 0.8 | 1.2 | 97 | -0.2 | 1.7 |
| Example 15 | Dispersion 7 | 60 nm | 96 | 96 | 4290 | 0.31 | 350 | 264 | 0.76 | 1.3 | 98 | -0.2 | 1.6 |
| Example 16 | Dispersion 7 | 60 nm | 98 | 97 | 4412 | 0.3 | 510 | 416 | 0.82 | 1.3 | 97 | -0.2 | 1.6 |
| Example 17 | Dispersion 7 | 60 nm | 95 | 95 | 4279 | 0.32 | 110 | 100 | 0.91 | 1.3 | 96 | -0.2 | 1.5 |
| Example 18 | None (ESP) | 90 nm | 96 | 96 | 4295 | 0.31 | 589 | 100 | 0.17 | 0.1 | 97 | -0.2 | 1.7 |
| Example 19 | None (ESP) | 90 nm | 98 | 97 | 4420 | 0.3 | 824 | 140 | 0.17 | 0.2 | 98 | -0.1 | 1.8 |
| Example 20 | None (ESP) | 90 nm | 95 | 95 | 4266 | 0.32 | 250 | 100 | 0.4 | 0 | 96 | -0.2 | 1.5 |
| Example 21 | None (ESP) | 90 nm | 97 | 97 | 4389 | 0.31 | 350 | 140 | 0.4 | 0 | 97 | -0.2 | 1.6 |
| Example 22 | None (ESP) | 90 nm | 95 | 95 | 4280 | 0.31 | 255 | 100 | 0.4 | 0 | 96 | -0.2 | 1.6 |
| Example 23 | None (ESP) | 300 nm | 100 | 99 | 4580 | 0.97 | 270 | 30 | 0.11 | 0.3 | 99 | -0.1 | 0.1 |
| Example 24 | None (ESP) | 300 nm | 97 | 97 | 4330 | 0.94 | 150 | 17 | 0.11 | 0.2 | 98 | -0.1 | 0.2 |
| Example 25 | None (ESP) | 300 nm | 95 | 95 | 4276 | 0.93 | 110 | 13 | 0.12 | 0.3 | 98 | -0.1 | 0.2 |
| Example 26 | None (ESP) | 300 nm | 99 | 98 | 4490 | 0.89 | 97 | 30 | 0.31 | 0.1 | 97 | -0.2 | 0.2 |
| Example 27 | None (ESP) | 300 nm | 96 | 96 | 4282 | 0.86 | 55 | 17 | 0.31 | 0.1 | 97 | -0.2 | 0.2 |
| Example 28 | None (ESP) | 300 nm | 96 | 96 | 4290 | 0.86 | 60 | 17 | 0.31 | 0.1 | 97 | -0.2 | 0.2 |
| Example 29 | None (ESP) | 630 nm | 96 | 95 | 3750 | 1.2 | 680 | 75 | 0.11 | 0.1 | 96 | -0.4 | 0.2 |
| Example 30 | None (ESP) | 980 nm | 95 | 94 | 3590 | 2.5 | 650 | 100 | 0.15 | 0.8 | 96 | -0.1 | 0.3 |

| | | | | | | | | | | | | | |
|---|---|---|---|---|---|---|---|---|---|---|---|---|---|
| *ESP: Abbreviation of electrospinning | | | | | | | | | | | | | |

### INDUSTRIAL APPLICABILITY

Since the light reflecting sheet of the present invention is excellent in light reflectance in a visual light range, it is preferable not only as a substrate for light reflector in LCD but also as light reflector in other applications requiring high reflectance, for example, illumination, copier, projection system display, facsimile machine, electric blackboard, white color standard of diffusion light, photographic paper, receiver paper, photograph bulb, light emission diode (LED), back sheet of solar battery, and the like.

### BRIEF DESCRIPTION OF THE DRAWINGS

Fig. 1 is a view showing the observation result of light reflecting sheet of Example 1 by SEM.
Fig. 2 is a diagram showing the reflectance in visual light range of light reflecting sheet of Example 1.
Fig. 3 is a view showing the observation result of light reflecting sheet of Example 18 by SEM.
Fig. 4 is a view showing the observation result of light reflecting sheet of Example 23 by SEM.
Fig. 5 is a view showing the observation result of light reflecting sheet of Example 30 by SEM.

## Claims

1. A light reflecting sheet comprising a sheet containing a fiber with a number mean diameter of 1 to 1000 nm, and having a light reflectance of 95% or more at a wavelength of 560 nm.

2. A light reflecting sheet comprising a sheet containing a fiber with a number mean diameter of 1 to 500 nm, and having a light reflectance of 95% or more at a wavelength of 560 nm.

3. The light reflecting sheet of Claim 1 or 2, wherein the mean reflectance at a wavelength region of 380 to 780 nm is 95% or more.

4. The light reflecting sheet of any one of Claims 1 to 3, wherein the number average pore diameter in said sheet containing the fiber is 0.001 to 1 µm.

5. The light reflecting sheet of any one of Claims 1 to 4, wherein the thickness thereof is 1 to 300 µm.

6. The light reflecting sheet of any one of Claims 1 to 5, wherein the thermal dimensional change at 90°C is -10 to +10%.

7. The light reflecting sheet of any one of Claims 1 to 6, further comprising a support.

8. The light reflecting sheet of any one of Claims 1 to 7, wherein color tone b* value of reflection surface of the light reflecting sheet is within a range of -2.0 to +2.0.

9. A liquid crystal display comprising the light reflecting sheet of any one of Claims 1 to 8.
